Europäisches Patentamt

European Patent Office

Office européen des brevets

(19)

(11) Veröffentlichungsnummer: **0 128 568**
**B1**

(12) # EUROPÄISCHE PATENTSCHRIFT

(45) Veröffentlichungstag der Patentschrift:
**07.12.88**

(21) Anmeldenummer: **84106608.7**

(22) Anmeldetag: **08.06.84**

(51) Int. Cl.⁴: **A 01 K 39/012**

(54) **Verpackungsbehältnis für Vogelfutter.**

(30) Priorität: **09.06.83 DE 3320833**

(43) Veröffentlichungstag der Anmeldung:
**19.12.84 Patentblatt 84/51**

(45) Bekanntmachung des Hinweises auf die Patenterteilung:
**07.12.88 Patentblatt 88/49**

(84) Benannte Vertragsstaaten:
**AT BE CH FR GB IT LI LU NL SE**

(56) Entgegenhaltungen:
**US-A- 3 441 002**
**US-A- 3 568 641**

(73) Patentinhaber: **Hinz, Carl Heinz, Nonnenwaldweg 32,
D-6229 Schlangenbad-Georgenborn (DE)**

(72) Erfinder: **Hinz, Carl Heinz, Nonnenwaldweg 32,
D-6229 Schlangenbad-Georgenborn (DE)**

(74) Vertreter: **Kodron, Rudolf S., Dipl.-Ing.,
Adam-Karrillon-Strasse 30, D-6500 Mainz (DE)**

ACTORUM AG

## Beschreibung

Die Erfindung betrifft ein Vogelfutterhäuschen mit einem das Vogelfutter aufnehmenden Behältnis, das – abgesehen von im Bereich seines unteren Endes vorgesehenen Seitenöffnungen für das Vogelfutter – allseitig abgeschlossen und mit einem Deckel verschlossen sowie am oberen Behältnisende mit einer Aufhängevorrichtung und im Bereich der Seitenöffnungen mit einer Vogelsitzstange versehen ist, wobei sich ein waagrechter Rohrkanal durch das Behältnis erstreckt.

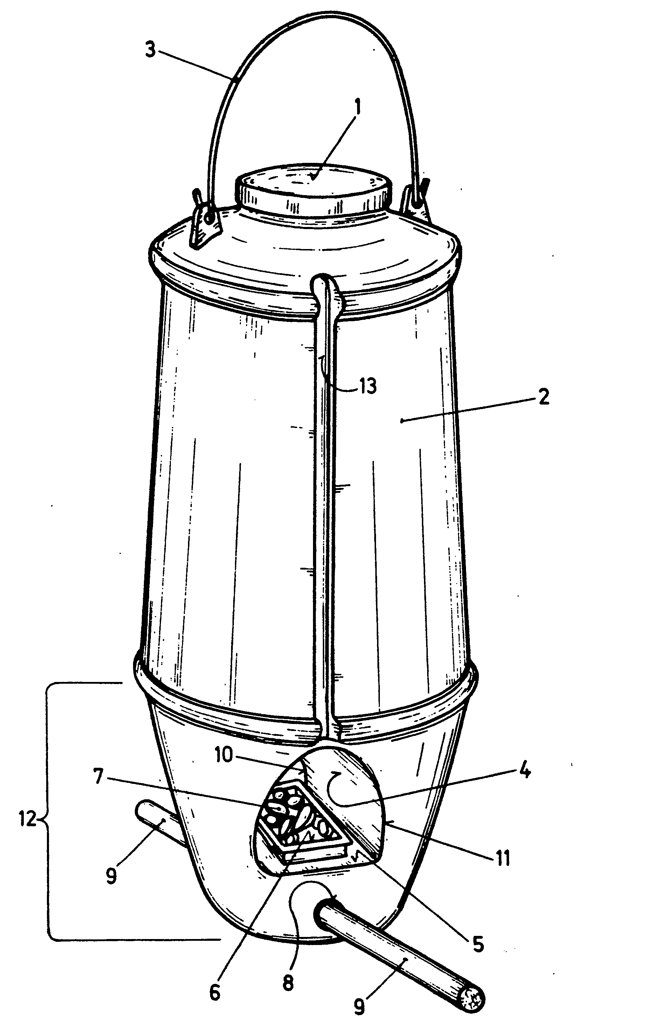

Der Erfindung liegt die Aufgabe zugrunde, ein Vogelfutterhäuschen der obengenannten und beispielsweise durch die Fig. 8–11 der US-A-3 568 641 bekannten Art derart zu verbessern, dass das ins Freie austretende Vogelfutter ein Schutzdach erhält, das kein vorragendes, leicht abbrechendes Teil darstellt.

Gelöst wird diese Aufgabe nach der Erfindung dadurch, dass eine einzige Austrittsöffnung für das Vogelfutter innerhalb des Rohrkanals in der unteren Rohrkanalwandung angeordnet ist, dass das untere Ende des Behältnisses konisch ausgebildet ist und der Rohrkanal in diesem konischen Ende verläuft.

Das Vogelfutterhäuschen ist vorteilhaft als Verpackungsbehälter für das Vogelfutter ausgebildet, wobei die Austrittsöffnung zunächst verschlossen und zur Benutzung als Futterhäuschen durch Schneiden oder Einstossen an der unteren Rohrkanalwandung freilegbar ist.

Das Behältnis kann mit einer die Vogelsitzstange während seiner Benutzung als Verpackungsbehälter aufnehmenden Aussennut versehen sein, wobei die Vogelsitzstange unter Bildung zweier Wandungsdurchbrechungen unterhalb des Rohrkanals durch die Behältniswandung zu treiben ist.

Nachfolgend wird anhand der Zeichnung eine Ausführungsform der Erfindung näher erläutert.

Das in Schrägansicht und etwa in natürlicher Grösse dargestellte Behältnis 2 für Vogelfutter 7 wird durch einen Deckel 1 allseits verschlossen und stellt somit ein geeignetes Verpackungsbehältnis für Vogelfutter dar, welches das Vogelfutter auf dem Transport sicher zusammenhält.

Ein am oberen Ende des Behältnisses 2 angebrachter U-förmiger Tragbügel 3 erleichtert das Hantieren und das Tragen des gefüllten Verpackungsbehältnisses.

Man kann nun dieses Behältnis an seinem Tragbügel und mit oder ohne Hilfe eines Bindfadens im Freien, beispielsweise an einem Baumast, aufhängen und damit als Vogelfutterhäuschen verwenden.

Es ist ein das Behältnis 2 waagrecht durchgreifender Rohrkanal 4 vorgesehen, der somit zwei Seitenöffnungen 10 und 11 schafft. An der unteren Rohrkanalwandung 5 ist eine Austrittsöffnung 6 für das Vogelfutter 7 durch Schneiden oder Einstossen freizulegen.

Eine Vogelsitzstange 9 ist in einer Aussennut 13 der Behältniswandung eingeklemmt und wird nach Entnahme derselben unterhalb des Rohrkanals 4 durch die Behältniswandungen getrieben, so dass die beiden Wandungsdurchbrechungen 8, 8 zur bleibenden Halterung der Vogelsitzstange entstehen.

Die konische Form des unteren Endes 12 des Behältnisses trägt dazu bei, dem futterpickenden Vogel einen vergrösserten Standplatz zu bieten.

Es wurde beobachtet, dass sich die futterpickenden Vögel durch windverursachte Drehbewegungen des Vogelfutterhäuschens bei der Futteraufnahme in keiner Weise stören lassen. Dieses Karussellfahren der Vögel bietet einen zusätzlich attraktiven Anblick.

## Patentansprüche

1. Vogelfutterhäuschen mit einem das Vogelfutter (7) aufnehmenden Behältnis (2), das – abgesehen von im Bereich seines unteren Endes (12) vorgesehenen Seitenöffnungen (10, 11) für das Vogelfutter (7) – allseitig abgeschlossen und mit einem Deckel (1) verschlossen sowie am oberen Behältnisende mit einer Aufhängevorrichtung und im Bereich der Seitenöffnungen (10, 11) mit einer Vogelsitzstange (9) versehen ist, wobei dsich ein waagrechter Rohrkanal (4) durch das Behältnis (2) erstreckt, dadurch gekennzeichnet, dass eine einzige Austrittsöffnung (6) für das Vogelfutter (7) innerhalb des Rohrkanals (4) in der unteren Rohrkanalwandung (5) angeordnet ist, dass das untere Ende (12) des Behältnisses (2) konisch ausgebildet ist und der Rohrkanal (4) in diesem konischen Ende verläuft.

2. Vogelfutterhäuschen nach Anspruch 1, dadurch gekennzeichnet, dass das Behältnis (2) als Verpackungsbehälter für das Vogelfutter (7) ausgebildet ist, wobei die Austrittsöffnung (6) zunächst verschlossen und zur Benutzung als Futterhäuschen durch Schneiden oder Einstossen an der unteren Rohrkanalwandung (5) freilegbar ist.

3. Vogelfutterhäuschen nach Anspruch 2, dadurch gekennzeichnet, dass das Behältnis (2) mit einer die Vogelsitzstange (9) während seiner Benutzung als Verpackungsbehälter aufnehmenden Aussennut (13) versehen ist, wobei die Vogelsitzstange (9) unter Bildung zweier Wandungsdurchbrechungen (8) unterhalb des Rohrkanals (4) durch die Behältniswandung zu treiben ist.

4. Vogelfutterhäuschen nach Anspruch 2, dadurch gekennzeichnet, dass ein Randstreifen der Austrittsöffnung (6) nach oben umgebogen ausgebildet ist.

## Claims

1. A bird feeder comprising a container (2) for reception of bird feed (7), which container apart from side apertures (10, 11), provided in the region of its lower end (12), for the bird feed (7) – is closed off on all sides, is sealed with a lid (1), and is provided at its upper end with a suspension device and in the region of the side apertures (10, 11) with a bird perch (9), in which respect a horizontal tubular channel (4) extends through the container (2), characterised in that a single exit aperture (6) for the bird feed (7) is arranged within the tubular channel (4) in the lower wall (5) thereof, and in that the lower end (12) of the container (2) is conical in design and the tubular channel (4) extends in this conical end region.

2. A bird feeder according to claim 1, characterised in that the container (2) is designed as a package container for the bird feed (7), in which respect the exit aperture (6) is initially sealed and for use as a feeder this is exposable by cutting or pushing-in of the lower wall (5) of the tubular channel.

3. A bird feeder according to claim 2, characterised in that the container (2) is provided with an outer groove (13) which receives the bird perch (9) during its use as package container, in which respect the bird perch (9) is intended to be driven, along with the formation of two wall perforations (8), through the container wall underneath the tubular channel (4).

4. A bird feeder according to claim 2, characterised in that the exit aperture (6) has an edge strip which is bent over upwardly.

**Revendications**

1. Mangeoire pour oiseaux avec un réservoir (2) recevant la nourriture pour oiseaux (7), qui – hormis des ouvertures latérales (10, 11) prévues dans la zone de son extrémité inférieure (12) pour la nourriture pour oiseaux (7) – est clos de tous côtés, est fermé par un couvercle (1) et est muni, à l'extrémité supérieure du réservoir, d'un dispositif de suspension et, dans la zone des ouvertures latérales (10, 11), d'un perchoir (9), un canal tubulaire horizontal (4) s'étendant à travers le réservoir (2), caractérisé en ce qu'une seule ouverture de sortie (6) de la nourriture pour oiseaux (7) est pratiquée à l'intérieur du canal tubulaire (4) dans la paroi inférieure de canal tubulaire (5), en ce que l'extrémité inférieure (12) du réservoir (2) est de forme conique, et en ce que le canal tubulaire (4) s'étend dans cette extrémité conique.

2. Mangeoire poir oiseaux conforme à la revendication 1, caractérisée en ce que le réservoir (2) est conçu sous la forme d'un récipient d'emballage de la nourriture pour oiseaux (7), l'ouverture de sortie (6) étant d'abord fermée et pouvant être ouverte, pour une utilisation comme mangeoire, sur la paroi inférieure du canal tubulaire (5) en la découpant ou en l'enfonçant.

3. Mangeoire pour oiseaux conforme à la revendication 2, caractérisée en ce que le réservoir (2) est muni d'une gorge extérieure (13) recevant le perchoir (9) lors de son utilisation comme récipient d'emballage, le perchoir (9) pouvant être emmanché dans la paroi du réservoir en pratiquant deux perçages de paroi (8) sous le canal tubulaire (4).

4. Mangeoire pour oiseaux conforme à la revendication 2, caractérisée en ce qu'un bord de l'ouverture de sortie (6) est replié vers le haut.